# EUROPÄISCHE PATENTSCHRIFT

(11) **EP 1 374 980 B1**
(45) Veröffentlichungstag und Bekanntmachung des Hinweises auf die Patenterteilung: **23.09.2009**
(21) Anmeldenummer: 03011800.4
(22) Anmeldetag: 24.05.2003
(51) Int. Cl.: B01D 63/08, B01D 61/14, B01D 63/16

(54) **Filter- oder Sortierscheibe und Verfahren zur Herstellung**
Filter disc or screen disc and method of manufacture
Disque de filtrage ou disque classeur et procédé de fabrication

(30) Priorität: 19.06.2002 AT 9202002
(43) Veröffentlichungstag der Anmeldung: 02.01.2004
(73) Patentinhaber: Andritz AG, 8045 Graz (AT)
(72) Erfinder: Gabl, Helmuth, Dipl.-Ing. Dr., 8046 Graz (AT); Buedenbender, Christian, Ing, 8045 Graz (AT); Sket, Peter, 8101 Gratkorn (AT)
(74) Vertreter: Schweinzer, Friedrich

(56) Entgegenhaltungen:
- EP-A- 0 504 853
- EP-A- 1 088 640
- WO-A-01/85317
- GB-A- 795 293
- GB-A- 1 023 456
- GB-A- 1 464 021
- US-A- 5 618 422
- US-B1- 6 343 697
- DATABASE WPI Week 198708 Derwent Publications Ltd., London, GB; AN 1987-055615 XP002316090 & SU 1 242 214 A ((AUMA-R) AS UKR MATERIAL PRO (HYDR-R) HYDRODRIVE AUTOMAT) 7. Juli 1986 (1986-07-07)

## Beschreibung

Die Erfindung betrifft eine Filter oder Sortierscheibe, beispielsweise für die Membranfiltration, mit einem Grundkörper, der mit einer Hohlwelle verbunden ist und auf dem Sieb- oder Filterelemente befestigt sind. Sie betrifft weiters ein Verfahren zur Herstellung derartiger Filterscheiben.

Bei Filtern mit Filterscheiben wird insbesondere bei der Membranfiltration eine große Filterfläche benötigt. Filter, wie sie z.B. in der WO 00/47312 beschrieben sind, benötigen eine große Anzahl von Filterscheiben, die für die Membranfiltration besonders aufwändig herstellbar sind.

Die US 6,343,697 B1 offenbart eine Filtervorrichtung mit einzelnen Filterscheibenhälften, die nur an Ihrem Rand miteinander verbunden sind. Diese Scheiben sind mit einem Filtergewebe überzogen.

Ziel der Erfindung ist es daher eine kostengünstige Herstellung derartiger Filterscheiben vorzusehen.

Erfindungsgemäß erfolgt dies dadurch, dass die Filterscheibe aus zwei, vorzugsweise identen, Hälften zusammengesetzt ist und dass die Fliterscheibenhälften miteinander mit einem Bajonettverschluss verriegelbar sind. Dadurch bleibt die Membran- oder Sortierseite an der Oberseite (= Filterseite) unbeschädigt und kann von der Permeatseite an den Distanzhalter geschweißt werden. Verriegelt werden einerseits die zwei Hälften bestehend aus Distanzblech, Grundstruktur und Filter- oder Sortierfläche bzw. die zweite Verschränkungsmöglichkeit kann zwischen Filter- oder Sortierflächengrundstruktur durchgerührt werden.

Mit dieser Maßnahme lassen sich sehr einfache und kostengünstige Grundteile herstellen und auch in einfacher Weise die Filterelemente auf dem Grundkörper befestigen.

Eine günstige Weiterbildung der Erfindung besteht darin, dass die weitestgehend identen Hälften im Tiefzieh - Stanzverfahren hergestellt sind, wobei sie alternativ auch als Gussbauteil oder Schweißteil ausgestaltet sein können.

Eine vorteilhafte Weiterbildung der Erfindung ist **dadurch gekennzeichnet, dass** das Sieb- oder Filterelement mit dem Grundkörper verschweißt ist, wobei es alternativ auch mit Laschen versehen und mit diesen mit dem Grundelement verbunden sein kann. So kann die Filterfläche ohne wesentliche Beeinträchtigung oder Zerstörung erhalten bleiben.

Die Erfindung betrifft auch ein Verfahren zur Herstellung einer Filterscheibe, insbesondere für die Membranfiltration, mit einem hohlen Grundkörper, der mit einer Hohlwelle verbunden ist und auf dem Sieb- oder Filterelemente befestigt sind. Dies ist erfindungsgemäß dadurch gekennzeichnet, dass die Fiiterscheibe aus zwei Hälften zusammengesetzt wird.

Ein günstige Weiterbildung der Erfindung ist dadurch gekennzeichnet, dass die Hälften im Schweiß oder Tiefziehverfahren hergestellt werden, wobei die Hälften auch gegossen werden können. Je nach Anwendungsfall kann so das geeignetste Material verwendet werden

Eine vorteilhafte Ausgestaltung der Erfindung ist dadurch gekennzeichnet, dass die Hälften miteinander verriegelt werden, wobei die Hälften nach der Verriegelung mit einem Fügeverfahren versiegelt und gegen wiederöffnen gesichert werden können.

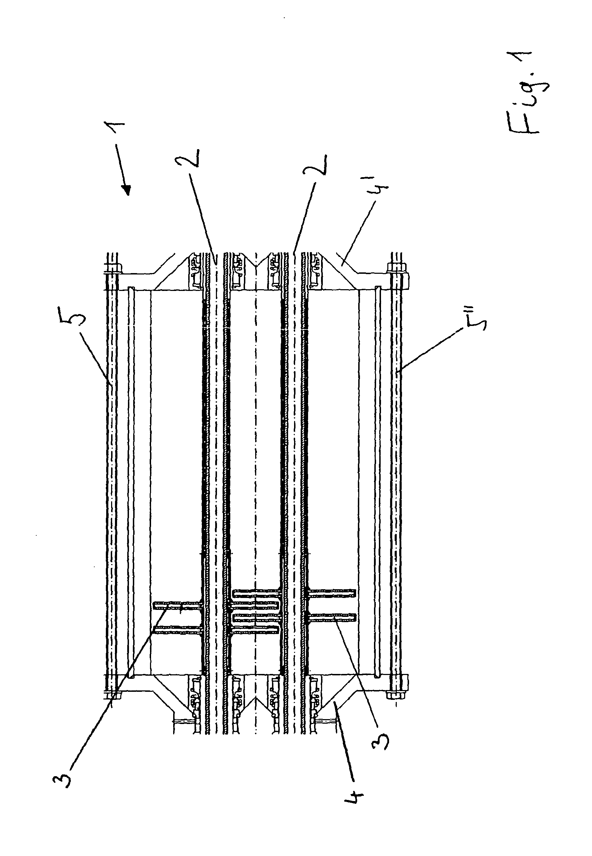

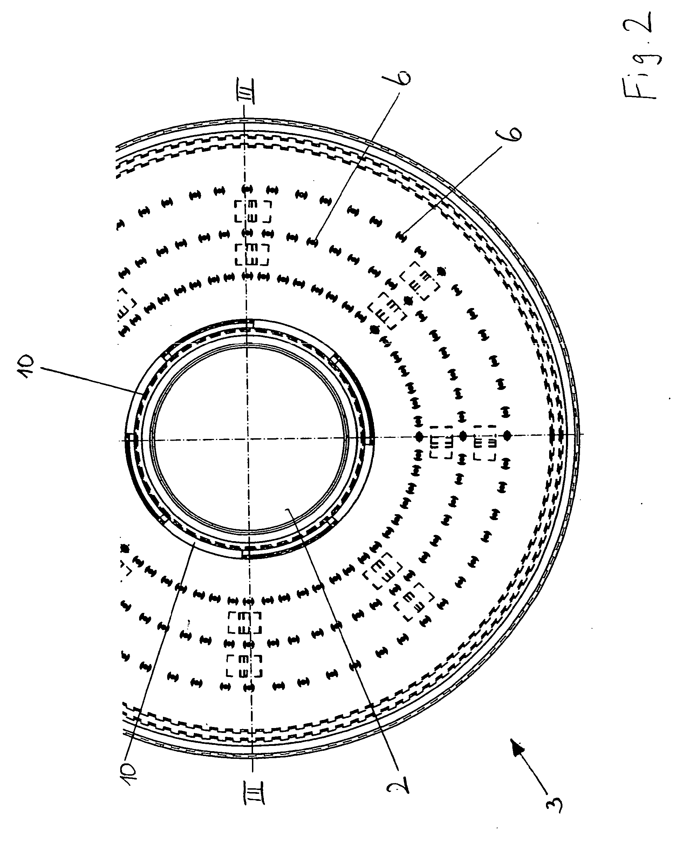

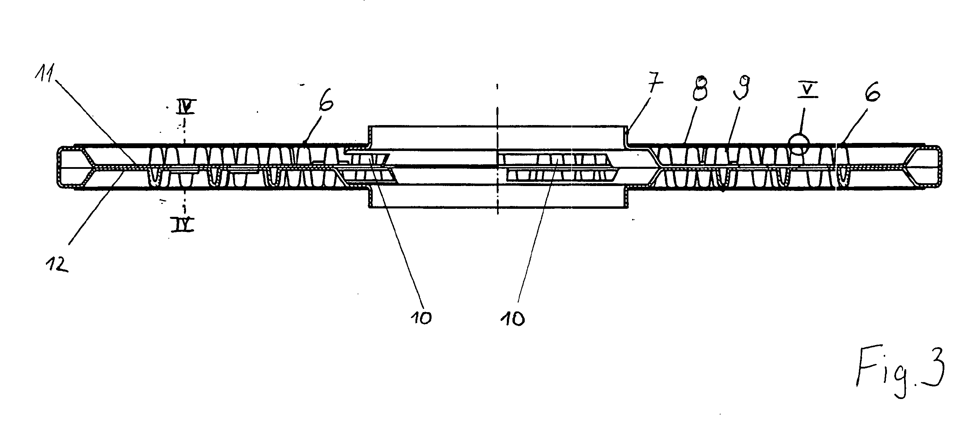

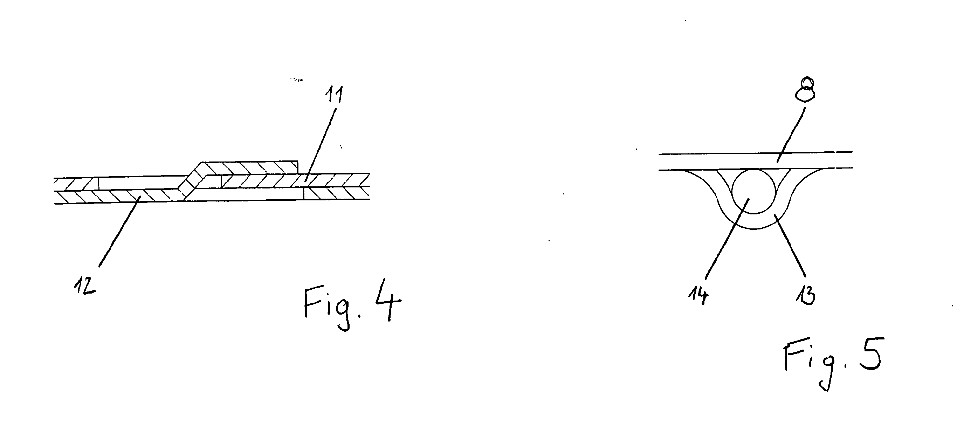

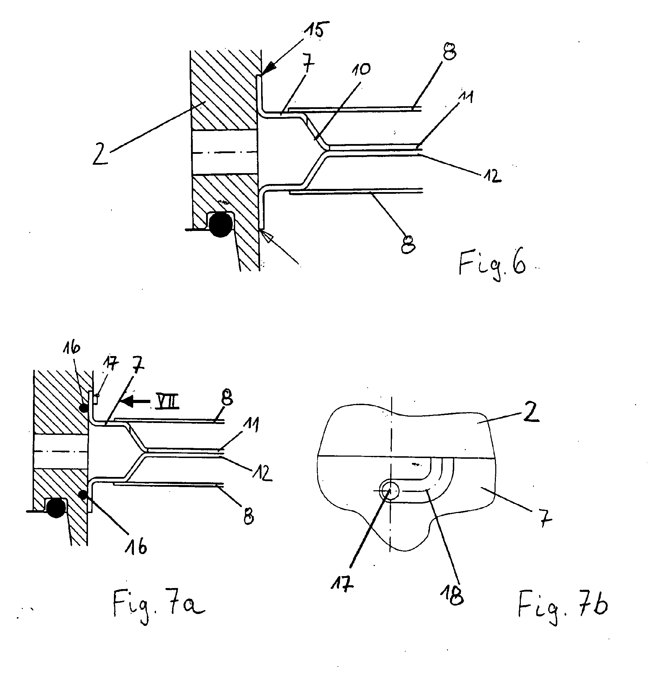

Die Erfindung wird nun anhand der Zeichnungen beispielhaft beschrieben, wobei Fig. 1 einen Schnitt durch ein Filter nach dem Stand der Technik, Fig. 2 eine Draufsicht auf eine erfindungsgemäße Filterscheibe, Fig. 3 einen Schnitt durch Fig. 2 gemäß Linie III-III, Fig. 4 einen Schnitt aus Fig. 3 gemäß Linie IV-IV, Fig. 5 einen Ausschnitt aus Fig. 3 gemäß Kreis V, Fig. 6 den Anschluss eines erfindungsgemäßen Filterelementes an eine Hohlwelle, Fig. 7a eine andere Variante der Befestigung eines erfindungsgemäßen Filterelementes an eine Hohlwelle und Fig. 7b eine Ansicht von Fig. 7a gemäß Pfeil Vll darstellt.

In Fig.1 ist ein Schnitt durch ein herkömmliches Filter 1 dargestellt, bei dem zwei Hohlwellen 2 erkennbar sind. Pro Hohlwelle sind hier zur deutlicheren Darstellung jeweils zwei Filterscheiben 3 dargestellt, wobei jedoch das gesamte Filter mit derartigen Filterscheiben 3 bestückt ist. Besonders gut sieht man hier, dass die beiden Endteile 4, 4' mit mehreren Zugstangen 5, 5' zusammengehalten werden.

Fig. 2 zeigt eine Draufsicht auf eine erfindungsgemäße Filter- oder Siebscheibe 3 mit einer Hohlwelle 2. Die Filter- oder Sortierscheiben 3 können Filter- oder Sortierflächen aus Keramik, Metall oder aus anderen Materialien, z.B. Kunststoff, aufweisen. Je nach Anwendungsfall können dabei Loch-, Poren- bzw. Schlitzbreiten von < 50 µm über mehrerer 100 µm bis zu ca. 2-5 mm Verwendung finden. Der Durchmesser der Hohlwelle 2 wird entsprechend dem Permeatmengenfluss gewählt, wodurch sich deutliche Durchmesserunterschlede bei Verwendung als Filirations- oder Sortiermaschine ergeben. In der Draufsicht sind die Befestigungspunkte 6 (beispielsweise Schweißpunkte) von der Filter- oder Sortierfläche zum Grundkörper der Filter- oder Sortierscheibe 3 erkennbar. Um das Permeat aus der Filter- oder Sortierscheibe 3 in die Hohlwelle 2 abfließen zu lassen sind am inneren Umfang der Filter- oder Sortierscheibe 3 mehrere Abflussöffnungen 10 vorgesehen.

In Fig. 3 ist der Schnitt durch die Filterscheibe 3 gemäß Linie III-III in Fig. 2 dargestellt. Man erkennt hier den Grundkörper 7, der als Tiefziehteil, Gussteil oder Schweißteil vorgesehen sein kann. Auf diesen Grundkörper 7 wird das Sieb- oder Filterelement 8 aufgebracht und z.B. mittels herkömmlichem Schweißverfahren (Elektronenstrahlschweißen, Laserschweißen, WIG-Schweißen, Löten, etc.) mit dem Grundkörper 7 verbunden. Die Schweißung kann als Punkt-, Linien- oder Flächenschweißung ausgeführt werden. Vorteilhafterweise wird die Schweißung von der Stützkonstruktionsseite her ausgeführt, da hierbei die geringstmögliche Zerstörung der Sieb- oder Filterfläche eintritt. Der Grundkörper 7 muss Tragund Zugkräfte aufnehmen, die aus dem Prozess (hoher Betriebsdruck, hoher Permeatwiderstand, Rückspülen, etc.) hervorgerufen werden. Um den daraus resultierenden mechanischen, pneumatischen und hydraulischen Beanspruchungen stand zu halten, sind verschiedenste Abstützungen 9 in verschiedenen Formen im durch Tiefziehen, Schweißen oder Giessen hergestellte Grundkörper 7 vorgesehen. Man erkennt auch hier die Abflussöffnungen 10 der Filter- oder Sortierscheibe 3 zur Hohlwelle 2.

Fig. 4 stellt einen Schnitt gemäß Linie IV-IV in Fig. 3 dar. Hier erkennt man, wie die beiden Hälften 11, 12 zusammengeschoben werden. Dies erfolgt durch Aufeinandersetzen der beiden Hälften 11, 12 und anschließendes Verdrehen um einen kleinen Winkel von ca. 2 - 5 °.

Fig. 5 zeigt einen Ausschnitt gemäß Kreis V in Fig. 3, wobei hier am Sieb- oder Filterelement 8 Laschen 13 angebracht sind, in die entsprechende Stäbe 14 des Grundkörpers 7 ragen. Dies ermöglicht eine einfache Befestigung des Sieb- oder Filterelementes 8 am Grundkörper 7.

Die Verbindung von Filterscheibe 3 zu Hohlwelle 2 ist von besonderer Bedeutung, da einerseits mechanische Kräfte zu übertragen und andererseits die Filterflächen gegen Kurzschlussströmungen abzudichten sind. Dies kann gemäß Fig. 6 erfolgen, wobei der Grundkörper 7 in einer Nut 15 direkt mit einem Standardfügeverfahren (Schweißen, Löten, Kleben, etc.) mit der Hohlwelle 2 verbunden wird.

Eine andere Möglichkeit ist in Fig. 7a gezeigt, wobei hier eine wieder lösbare Verbindung von Scheibenelement 3 und Hohlwelle 2 vorgesehen ist. Der mit dem Sieb- oder Filterelement 8 versehene Grundkörper 7 wird mittels in der Hohiwelle 2 angeordneten Dichtungen 16 gegen Kurzschlussströme abgedichtet. In der Ansicht in Fig. 7b erkennt man den Zapfen 17 an der Hohlwelle 2 und den Schlitz 18 im Grundkörper 7, die einen Bajonettverschluss zur Befestigung der Filterscheibe 3 bilden.

Die Erfindung ist nicht durch die dargestellten Beispiele beschränkt. So kann auch eine volle Zentralwelle vorgesehen sein, die von einer Hüllwelle umgeben ist, Wobei zwischen Zentralwelle und Hüllwelle ein Hohlraum besteht. Die Filter- oder Sortierscheiben sind dann auf der Hüllwelle befestigt und das Permeat wird zwischen Hüllwelle und Zentralwelle abgeführt.

## Patentansprüche

1. Filter oder Sortierscheibe, beispielsweise für die Membranfiltration, mit einem Grundkörper, der mit einer Hohlwelle verbunden ist und auf dem Sieb- oder Filterelemente befestigt sind, wobei die Filter- oder Sortierscheibe (3) aus zwei Hälften (11, 12) zusammengesetzt ist, **dadurch gekennzeichnet, dass** die Filter- oder Sortierscheibenhälften (11, 12) miteinander mit einem Bajonettverschluss verriegelbar sind.

2. Filter- oder Sortierscheibe nach Anspruch 1, **dadurch gekennzeichnet, dass** die Hälften (11, 12) im Schweiß- oder Tiefzieh-Verfahren hergestellt sind.

3. Filter- oder Sortierscheibe nach Anspruch 1, **dadurch gekennzeichnet, dass** Hälften (11, 12) als Gussbauteil ausgestaltet sind.

4. Filter- oder Sortierscheibe nach einem der Ansprüche 1 bis 3, **dadurch gekennzeichnet, dass** das Sieb- oder Filterelement (8) mit dem Grundkörper (7) verschweißt ist.

5. Filter- oder Sortierscheibe nach Anspruch 4, **dadurch gekennzeichnet, dass** als Schweißverfahren Elektronenstrahlschweißen, Laserschweißen, WIG-Schweißen oder Löten eingesetzt wird.

6. Filter- oder Sortierscheibe nach einem der Ansprüche 1 bis 3, **dadurch gekennzeichnet, dass** das Sieb- oder Filterelement (8) mit Laschen (13) versehen und mit diesen mit dem Grundelement (7) verbunden ist.

7. Verfahren zur Herstellung einer Filter- oder Sortierscheibe, beispielsweise für die Membranfiltration, mit einem Grundkörper, der mit einer Hohlwelle verbunden ist und auf dem Sieb- oder Filterelemente befestigt sind, wobei die Filter- oder Sortierscheibe (3) aus zwei Hälften (11, 12) zusammengesetzt wird **dadurch gekennzeichnet, dass** die Hälften (11, 12) mit einem Bajonettverschluss miteinander verriegelt werden.

8. Verfahren nach Anspruch 7, **dadurch gekennzeichnet, dass** die Hälften (11, 12) im Tiefzieh-Stanzverfahren hergestellt werden.

9. Verfahren nach Anspruch 7, **dadurch gekennzeichnet, dass** die Hälften (11, 12) gegossen werden.

10. Verfahren nach Anspruch 7, **dadurch gekennzeichnet, dass** die Hälften (11, 12) als Schweißteil hergestellt werden.

11. Verfahren nach einem der Ansprüche 7 bis 10, **dadurch gekennzeichnet, dass** die Hälften (11, 12) nach der Verriegelung mit einem Fügeverfahren versiegelt und gegen Wiederöffnen gesichert werden.

## Claims

1. Filter or screening disc, for example for membrane filtration, with a base structure that is connected to a hollow shaft and to which screening or filter elements are fixed, where the filter or screening disc (3) is made up of two halves (11, 12), **characterised by** the filter or screening discs halves (11, 12) being lockable with each other with a bayonet catch

2. Filter or screening disc according to claim 1, **characterised by** the halves (11, 12) being manufactured using the welding or deep-drawing process.

3. Filter or screening disc according to Claim 1, **characterised by** the halves (11, 12) being made as cast parts.

4. Filter or screening disc according to one of the Claims 1 to 3, **characterised by** the screen or filter element (8) being welded to the base structure (7).

5. Filter or screening disc according to Claim 4, **characterised by** electronbeam welding, laser welding, TIG welding or soldering being used as welding process.

6. Filter or screening disc according to one of the Claims 1 to 3, **characterised by** the screen or filter element (8) being provided with clips (13) and attached to the base structure (7) with these clips (13).

7. Process for manufacturing a filter or screening disc, e.g. for membrane filtration, with a base structure (7) that is connected to a hollow shaft and on which the screen or filter elements (8) are fixed, where the filter or screening disc (3) is made up of two halves (11, 12), **characterised by** the two halves (11, 12) being lockable with each other with a bayonet catch.

8. Process according to Claim 7, **characterised by** the halves (11, 12) being manufactured in the deep-drawing punching process.

9. Process according to Claim 7, **characterised by** the halves (11, 12) being cast parts.

10. Process according to Claim 7, **characterised by** the halves (11, 12) being welded parts.

11. Process according to one of the Claims 7 to 10, **characterised by** the halves (11, 12) being sealed with a soldering process after locking and secured against reopening.

## Revendications

1. Disque de filtre ou de classeur, par exemple pour la filtration à membrane, avec une structure de base liée à un arbre creux, à laquelle sont fixés des éléments tamiseurs ou filtrants, le disque de filtre ou de classeur (3) étant composé de deux moitiés (11, 12), **caractérisé en ce que** les moitiés (11, 12) du disque de filtre ou de classeur peuvent être verrouillées l'une à l'autre avec un joint à baïonnette.

2. Disque de filtre ou de classeur selon la revendication 1, **caractérisé en ce que** les moitiés (11, 12) sont fabriquées selon la méthode de soudage ou d'emboutissage.

3. Disque de filtre ou de classeur selon la revendication 1, **caractérisé en ce que** les moitiés (11, 12) sont des pièces de fonte.

4. Disque de filtre ou de classeur selon l'une des revendications 1 à 3, **caractérisé en ce que** l'élément tamiseur ou filtrant (8) sont soudés à la structure de base (7).

5. Disque de filtre ou de classeur selon la revendication 4, **caractérisé en ce qu'en tant que** méthode de soudage, le soudage par bombardement électronique, soudage par radiation laser, soudage TIG ou le brasage sont utilisés.

6. Disque de filtre ou de classeur selon l'une des revendications 1 à 3, **caractérisé en ce que** l'élément tamiseur ou filtrant (8) est pourvu de colliers (13) et attaché à la structure de base (7) avec ces colliers (13).

7. Procédé de fabrication d'un disque de filtre ou de classeur, par exemple pour la filtration à membrane, avec une structure de base (7) liée à un arbre creux, à laquelle sont fixés des éléments tamiseurs ou filtrants (8), le disque de filtre ou de classeur (3) étant composé de deux moitiés (11, 12), **caractérisé en ce que** les moitiés (11, 12) du disque de filtre ou de classeurs peuvent être verrouillées l'une à l'autre avec un joint à baïonnette.

8. Procédé selon la revendication 7, **caractérisé en ce que** les moitiés (11, 12) sont fabriquées selon la méthode d'emboutissage-découpage.

9. Procédé selon la revendication 7, **caractérisé en ce que** les moitiés (11, 12) sont des pièces de fonte.

10. Procédé selon la revendication 7, **caractérisé en ce que** les moitiés (11, 12) sont des pièces soudées.

11. Procédé selon l'une des revendications 7 à 10, **caractérisé en ce que** les moitiés (11, 12) sont scellés avec un procédé de brasage après le verrouillage et arrêtés pour prévenir la réouverture.
